# EUROPEAN PATENT APPLICATION

(11) **EP 3 217 674 A1**
(43) Date of publication of application: **13.09.2017**
(21) Application number: 16159526.9
(22) Date of filing: 09.03.2016
(51) Int. Cl.: H04N 21/274, H04N 21/45, H04N 21/65

(54) **DISTRIBUTED CLOUD PVR**

(71) Applicant: TV for Friends GmbH, 80333 München (DE)
(72) Inventor: Baubin, Thomas, 4866 Unterach (AT)
(74) Representative: Eisenführ Speiser

(57) **Abstract**

Server method for managing personal content recording of a content broadcast event as a user's private copy, comprising: (S1) receiving a user request to record the content broadcast event, and, in response to receiving the user request; (S2) determining whether or not the content broadcast event is allowed for over-the-top (OTT) retransmission; (S3) determining whether or not the content broadcast event is allowed for storage in a hosted storage system; (S4) if the content broadcast event is allowed for over-the-top retransmission: initiating a reception of an over-the-top retransmission of the content broadcast event; (S5) if the content broadcast event is not allowed for over-the-top retransmission: requesting a user client device to receive the content broadcast event directly from a content broadcasting source; (S6) if the content broadcast event is allowed for hosted storage: initiating a recording of the content broadcast event in a useraccessible recording space of the hosted storage system; (S7) if the content broadcast event is not allowed for hosted storage: requesting the user client device to record the content broadcast event in a personal local storage space.

## Description

The present invention relates to a server method for managing personal content recording of a content broadcast event, a client method for managing personal content recording of a content broadcast event, a server arrangement comprising at least a management server for managing personal content recording of a content broadcast event and a user client.

Home Personal video recorders (PVRs) became readily available in recent years. Known hosted PVRs, so called networked or cloud-based PVRs receive a content broadcast event from an over-the-top retransmission source and record the content broadcast event in hosted storage system accordingly. The term hosted storage system refers to a storage system operated and/or to be answered for by a third-party, i.e. not the user himself. User can stream the recorded content broadcast event to a user client in order to view the content broadcast event on a monitor. On the other hand home PVRs are available which receive a content broadcast event directly from a content broadcasting source.

The term broadcast/broadcasting refers to a linear distribution of audio or video content to unspecific recipients via "conventional" distribution channels, namely those operated by a multiple system operator, e.g. a cable company like "Kabel Deutschland" or satellite operator like SAS S.A. (Astra). An example is linear broadcast television. Accordingly, a content broadcasting channel can be DVB-C, DVB-S, DVB-T or their analogue counterparts. A content broadcast event is a time-delimited event distributed over a content broadcasting channel.

An over-the-top retransmission denotes the retransmission of a content broadcast event over the open unmanaged Internet - the Internet being an OTT retransmission channel - without a multiple system operator being involved in the control or distribution of the content broadcast event. An over-the-top retransmission source can be - for example - a multicast content server operated by a TV station. Contrary to OTT, IPTV denotes a distribution of video content over a dedicated managed network.

It is an object of the invention to provide a method and apparatuses for managing personal content recording of a content broadcast event.

According to a main aspect of the invention the object is solved by a method, preferably server based, for managing personal content recording of a content broadcast event as a user's private copy, comprising:
- recommending to the user at least one content broadcast event by means of a recommender application that is running on a hosted storage system and/or remotely on a user client device;
- receiving, in response to the recommendation, a user request to record the content broadcast event, and, in response to receiving the user request:
- initiating a reception of an over-the-top retransmission of the content broadcast event via a streaming application that is capable of connecting to an OTT retransmission source and is running on a hosted storage system;
- initiating a recording of the content broadcast event in a user-accessible recording space of the hosted storage system as a user-private copy.

The recommender application that is running on a hosted storage system can produce a list of recommendations to be provided to the user, e.g. based on EPG data, through collaborative and/or content-based filtering. Collaborative filtering includes setting up a user specific model from a user's past viewing behaviour of content data. The user specific model can be used to predict one content broadcast event that the user may have an interest in. Content-based filtering typically uses metadata of an content item in order to recommend additional content items with similar metadata.

In a preferred embodiment, the following steps are performed between the step of receiving, in response to the recommendation, a user request to record the content broadcast event and the step of initiating a recording of the content broadcast event in a user-accessible recording space of the hosted storage system:
- determining whether or not the content broadcast event is allowed for over-the-top retransmission; and/or
- determining whether or not the content broadcast event is allowed for storage in a hosted storage system; and/or
- initiating the reception of the over-the-top retransmission of the content broadcast event if the content broadcast event is allowed for over-the-top retransmission; and/or
- if the content broadcast event is not allowed for over-the-top retransmission: requesting a user client device to receive the content broadcast event directly from a content broadcasting source;

Wherein, preferably, the step of initiating a recording of the content broadcast event in a user-accessible recording space of the hosted storage system is performed if the content broadcast event is allowed for hosted storage; and wherein the method preferably comprises the step:
- if the content broadcast event is not allowed for hosted storage: requesting the user client device to record the content broadcast event in a personal local storage space.

According to a further preferred embodiment, the wherein the content broadcast is provided by a source, preferably an OTT retransmission source, in an adaptive streaming format, preferably DASH, providing for at least a high quality representation and a lower quality representation of the content broadcast event, wherein the initiated recording of the content broadcast event in the user-accessible recording space of the hosted storage system is a recording of the high quality representation of the content broadcast event, wherein the high quality representation is preferably the representation with the highest available quality.

Advantageously the method further comprises the step of initiating a recording of one and the same content broadcast event in a group-accessible recording space of the hosted storage system as a redundant copy of the high quality representation and as at least a further redundant copy of the lower quality representation.

In addition to the high quality representation preferably at least a further copy of the lower quality representation is initiated to be recorded in the user-accessible recording space of the hosted storage system. Preferably, the high quality representation is the private copy representation of the content broadcast event that is recorded as a private copy exclusively for this user in the user-accessible recording space of the hosted storage system.

According to a further preferred embodiment each content broadcast event of a broadcast channel predefined by the user is recorded end-to-end and is purged from the user-accessible recording space of the hosted storage system a predetermined time span after completion of a continuous transmission of the content broadcast event, wherein the predetermined time span is preferably the end-to-end length of the content broadcast event.

According to a further preferred embodiment the method comprises playing out to a user, upon a user request, the content broadcast event, preferably with a minimum time-delay, parallel to recording the content broadcast event in the user-accessible recording space of the hosted storage system.

According to a further preferred embodiment the method comprises inserting advertising content, preferably TV advertising, that is personalized to the user into an on-demand stream of a broad cast event or broadcast events upon playing the stream to user, preferably based on manifest data.

According to a first aspect of the invention the object is solved by a server method for managing personal content recording of a content broadcast event as a user's private copy, comprising:
- receiving a user request to record the content broadcast event, and, in response to receiving the user request:
- determining whether or not the content broadcast event is allowed for over-the-top retransmission;
- determining whether or not the content broadcast event is allowed for storage in a hosted storage system;
- if the content broadcast event is allowed for over-the-top retransmission: initiating a reception of an over-the-top retransmission of the content broadcast event;
- if the content broadcast event is not allowed for over-the-top retransmission: requesting a user client device to receive the content broadcast event directly from a content broadcasting source;
- if the content broadcast event is allowed for hosted storage: initiating a recording of the content broadcast event in a user-accessible recording space of the hosted storage system;
- if the content broadcast event is not allowed for hosted storage: requesting the user client device to record the content broadcast event in a personal local storage space.

As of the invention, a manual user action to choose a source for receiving and recording a content broadcast event becomes expendable: The automatic choice of source is realized by technical means. Thus, the management of personal content recording of a content broadcast event is less complex. By employing that method an appropriate source for receiving and recording a content broadcast event will be automatically chosen based on a certain license status associated with the content broadcast event. Advantageously - from a legal viewpoint - a user obtains a legally valid private copy of a content broadcast event.

The invention includes the realization that network-based PVRs require an over-the-top retransmission license of - for example - a TV station provider and must proof to record a content broadcast event as a user's private copy. Some TV stations still object OTT retransmission at least for some of their content broadcast events, e.g. blockbuster movies. Therefore, such movies within a TV program must be received directly from a content broadcasting source, e.g. via DVB-S/T/C channel and recording must be done locally on a personal user client that can be connected to a TV via HDMI connector or be plugged in a router to be accessed by a TV app through a LAN connection.

In a preferred embodiment the user-accessible recording space of the hosted storage system is a user-specific recording space. Preferably the method includes recording one private copy of the content broadcast event for each user in a respective user specific recording-space.

Alternatively, the method includes initiating a recording of the content broadcast event as a master copy in the user-accessible recording space of the hosted storage system. Preferably the method included granting the user access to the master copy.

In a preferred embodiment the server method comprises determining whether or not the content broadcast event recorded in the user client device is allowed for upload to the hosted storage system. If the content broadcast event is allowed for upload to the hosted storage system the server method can include requesting the user client device to upload the content broadcast event to the user specific recording space of the hosted storage system. Advantageously the content broadcast event recorded in the user client device can be deleted after upload to save memory of the user client device. In a preferred embodiment the server method includes an obligatory deletion of the content broadcast event recorded in the user client device after upload completion. Alternatively - if the content broadcast event is not allowed for upload to the hosted storage system - the content broadcast event remains on the user client device.

In a further preferred embodiment the method comprises maintaining a content broadcast database allocating to each content broadcast event reception licence information indicating whether or not the content broadcast event is allowed for over-the-top retransmission and/or event storage licence information indicating whether or not the content broadcast event is allowed for hosted storage.

Preferably, determining whether or not the content broadcast event is allowed for storage in a hosted storage system comprises reading the allocated event reception licence information from the content broadcast database.

Furthermore preferred, determining whether or not the content broadcast event is allowed for storage in a hosted storage system comprises reading the allocated event storage licence information from the content broadcast database.

Additionally, maintaining the content broadcast database can include allocating to each content broadcast event upload licence information indicating whether or not the content broadcast event recorded in the personal local storage space is allowed for upload to the hosted storage system.

Furthermore, determining whether or not the content broadcast event recorded the personal local storage space is allowed for upload to the hosted storage system can comprise reading the allocated event upload licence information from the content broadcast database.

In a further preferred embodiment the method includes maintaining a user relation management database containing user related information, preferably one or more user requests to record a content broadcast event, quantity of user clients per user, identification number of the user client assigned to the user, a status value indicating whether or not a user client is currently available in a network, a memory value indicating free recording space of a personal local storage space comprised by the user client, and so forth. Preferably, the user relation management database contains user content preferences, such as genres, subgenres, composers, actors, TV station, series title etc.

The user relation management database can be incorporated in a management servers' user relation unit.

Preferably the method comprises allocating in content broadcast database to each content broadcast event play-out licence information indicating whether or not the content broadcast event is allowed to be played-out on the user client. If - for example - a film studio, e.g. in context of an ultraviolet licence, prohibits a content broadcast event to be played out on a portable user client, a play-out can block can be initiated upon reading out play-out licence information from content broadcast database.

Preferably, the recording of the content broadcast event is only initiated after a user request and thereafter up to completion conducted without manual interference. It is further preferred if the reception of the over-the-top retransmission of the content broadcast event is performed simultaneously with a corresponding broadcast transmission of the event and unaltered.

In a further preferred embodiment the method comprises determining whether or not the recorded content broadcast event requires encryption and/or play-out protection to ensure to be viewable by an authorized user only. Accordingly the content broadcast event recorded in the personal local storage space can be encrypted and/or otherwise protected from play-out prior to upload. Preferably the method employs a digital rights (DRM) scheme, e.g. Microsoft's PlayReady technology, to control the use of a content broadcast event initially recorded in a personal locals storage space and uploaded to the hosted storage system and/or to control the use of a content broadcast recorded in the user-specific recording space of the hosted storage system.

Alternatively - if the method includes initiating a recording of the content broadcast event as a master copy in the user-accessible recording space of the hosted storage system - the method can employ a DRM scheme to control the use of and/or the access to a content broadcast recorded as a master copy.

Additionally or alternatively the recorded content broadcast event can be transcoded prior to upload, e.g. for saving upload bandwidth.

Preferably the method includes receiving the over-the-top retransmission of the content broadcast event simultaneously with a corresponding broadcast transmission of the event and unaltered. In order to prevent others than the user to access a user specific recording space, the method can include identifying the user client device in order to control access to the user specific recording space. The recording of the content broadcast event in a user specific recording space can be performed such that a one-to-one (bijective) relation between user and the recorded content broadcast event is given.

Preferably, the method includes determining whether or not the user's personal media client and/or the user specific recording space features sufficient free memory to record the content broadcast event.

In a further embodiment the method includes handling more than one user client per user, preferably recording different content broadcast events in personal local storage spaces of different user clients simultaneously.

The method can further comprise recommending to a user a content broadcast event to be recorded. For that purpose the method can include maintaining a recommender engine. In a preferred embodiment the method comprises retrieving user related information from the user relation management database.

Preferably, the method includes casting to the user client device and/or personal mobile device a recommendation of a content broadcast event to be recorded. A response to the cast can be awaited as a user request indicating a user's wish to record the content broadcast event.

Furthermore, the method can include streaming the recorded broadcast event stored in the user specific recording space to the user's personal media client. Preferably, streaming is performed upon a user request indicating a user's wish to play-out the content broadcast event.

Advantageously - to save recording memory - start time and end time of the content broadcast event can be identified automatically by analysing the over-the-top retransmission stream. A recording can be started a predefined number minutes prior to the beginning of a scheduled content broadcast event and can be stopped a predefined number of minutes after the end of the scheduled content broadcast event.

Preferably the OTT retransmission source is a multicast server.

The hosted storage system may be implemented as a cloud storage system.

The features described with respect to the method according to the first aspect of the invention can form further embodiments if combined with the method according to the main aspect of the invention or vice-versa.

According to a second, client-related aspect of the invention the object is solved by a client method for managing personal content recording of a content broadcast event as a user's private copy, comprising the steps of:
- receiving a management server request to receive the content broadcast event directly from a content broadcasting source, and, in response to receiving the management server request:
- initiating a reception of the content broadcast event directly from a content broadcasting source;
- receiving a management server request to record the content broadcast event in a personal local storage space, and, in response to receiving the management server request:
- initiating a recording of the content broadcast event in a personal local storage space.

In certain embodiments the client method includes receiving a management server request to upload the content broadcast event to the user specific recording space of the hosted storage system. In response to receiving the management server request an upload of the content broadcast event to the user specific recording space of the hosted storage system can be initiated.

Advantageously the client method includes sending a user request to the management server to play out the content broadcast event recorded in the user- accessible recording space of the hosted storage system. The content broadcast event can be streamed from the user- accessible recording space of the hosted storage system.

In a preferred embodiment content broadcast event is received directly from a digital video broadcasting (DVB) source. For example, a direct reception can involve a SAT-over-IP and/or Cable-over-IP or similar distribution in a user's home network. In another words, a reception of the content broadcast event is considered to be "directly" from a content broadcasting source as long it is performed in a (local) user client sphere of the user. Preferably IP distribution includes the demodulation of a DVB signal and its conversion to IP-based signals without compression of audio and/or video data contained in the DVB signal.

According to a third, server-related aspect of the invention the object is solved by a server arrangement comprising at least a management server for managing personal content recording of a content broadcast event as a user's private copy, the management server comprising:
- a user relation unit adapted to receive a user request to record the content broadcast event
- a validation unit adapted to determine whether or not the content broadcast event is allowed for over-the-top retransmission; and adapted to determine whether or not the content broadcast event is allowed for storage in a hosted storage system
- a reception management unit adapted to initiate a reception of an over-the-top retransmission of the content broadcast event; and adapted to request a user client device to receive the content broadcast event directly from a content broadcasting source
- a recording management unit adapted to initiate a recording of the content broadcast event in a user- accessible recording space of the hosted storage system; and to request the user client device to record the content broadcast event in a personal local storage space.

Preferably, the user-accessible recording space is a user-specific recording space. Alternatively, the user-accessible recording space can be provided to hold the content broadcast event as a master copy.

In further embodiments the validation unit is adapted to determine whether or not the content broadcast event recorded in the user client device is allowed for upload to the hosted storage system. The management server can comprise a server upload management unit which is adapted to request the user client device to upload the content broadcast event to the user specific recording space of the hosted storage system.

Preferably the server arrangement comprises one or more play-out server for playing-out to the user a recording of the content broadcast event recorded in a user-accessible recording space of the hosted storage system. The hosted storage system can be comprised by the play-out server.

Preferably, the management server comprises a content broadcast database adapted to allocate to each content broadcast event reception license information indicating whether or not the content broadcast event is allowed for over-the-top retransmission and event storage licence information indicating whether or not the content broadcast event is allowed for hosted storage. The validation unit can be adapted to read the allocated event reception licence information and the allocated event storage licence information from the content broadcast database.

Preferably, the content broadcast database is furthermore adapted to allocate to each content broadcast event upload licence information indicating whether or not the content broadcast event recorded in the personal local storage space is allowed for upload to the hosted storage system. The validation unit can be adapted to read the allocated event upload licence information from the content broadcast database.

In further preferred embodiments, the server arrangement can comprise a recommender engine for recommending to a user a content broadcast event to be recorded.

Features and advantages described with respect to the server method according to the first aspect of the invention shall pertain to the server arrangement according to the third aspect correspondingly. If - for example - the server method comprises the step of recommending to a user a content broadcast event to be recorded, the server arrangement shall be preferably adapted to recommend to a user a content broadcast event to be recorded.

According to a fourth, user client-related aspect of the invention the object is solved by a user client comprising:
- a communication unit adapted to receive a management server request to receive the content broadcast event directly from a content broadcasting source; and adapted to receive a management server request to record the content broadcast event in a personal local storage space
- a client reception management unit adapted to initiate a reception of the content broadcast event directly from a content broadcasting source
- a client recording management unit adapted to initiate a recording of the content broadcast event in a personal local storage space.

In a preferred embodiment the user client devices comprises a communication unit that is adapted to receive a management server request to upload the content broadcast event to the user specific recording space of the hosted storage system. The user client device can further comprise a client uploading management unit adapted to initiate an upload of the content broadcast event to the user specific recording space of the hosted storage system.

Preferably, the client is adapted to sending a user request to the management server to play out the content broadcast event recorded in the user-accessible recording space of the hosted storage system. A user request, for example, can be retrieved via an on-screen menu.

To provide a compact and portable user client, the user client can be designed as a monolithic HDMI-dongle comprising an on-board DVB-S, DVB-T and/or DVB-C receiver. Alternatively, the user client can be designed as a monolithic HDMI-dongle without an on-board DVB receiver. In this case the user client can be equipped with means to engage to an external DVB receiver in the user's home, e.g. via WLAN and/or LAN. Alternatively to being designed as a monolithic dongle, the user client can be designed as a set top box.

Preferably the user client comprises an encryption unit to encrypt a content broadcast event prior to upload. Thus, it is ensured that a content broadcast event is only viewable by an authorized user having the appropriate encryption key. Further preferred, the user client comprises a transcoding unit, e.g. a H.264/MPEG-4 or a HEVC transcoder, to transcode DVB-S/T/C transport stream. It is to be understood that the functions of the user client can be embodied by discrete logic, e.g. a quad-core processor running in an Android environment or alike.

The object is also solved by a computer program product that is adapted to initiate, when run on a server or a user client, a method according to above described aspects of the invention.

Features and advantages described with respect to the client method according to the second aspect of the invention shall pertain to the user client device according to the fourth aspect correspondingly. If - for example - the client method comprises the step of streaming the content broadcast event from the user- accessible recording space of the hosted storage system, the user client shall be preferably adapted to stream the content broadcast event from the user- accessible recording space of the hosted storage system.

The different aspects of the invention will now be described, by way of example, based on embodiments with reference to the accompanying drawings, wherein:
Fig. 1 shows schematically a flow chart of a server method according to a first aspect of the invention;
Fig. 2 shows schematically a flow chart of a client device method according to the second aspect of the invention;
Fig. 3 shows schematically a server arrangement according to the third aspect of the invention in communication with a client device according to the fourth aspect of the invention.
Fig. 4 shows schematically a server based method, for managing personal content recording of a content broadcast event as a user's private copy.

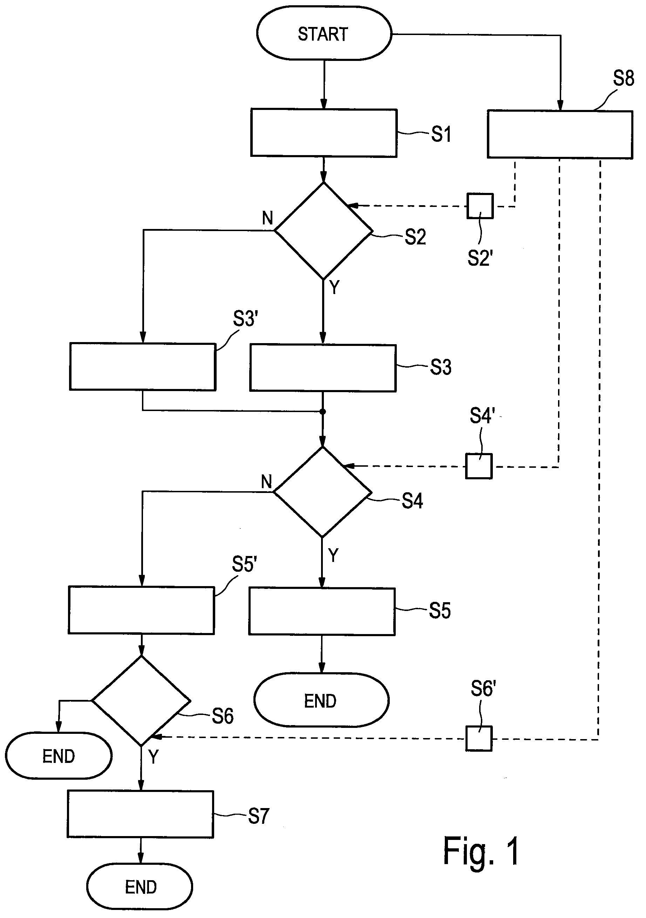

A flow chart of a server method according to the first aspect of the invention is schematically shown in Fig. 1. Start and end of the exemplary server method is represented by ovals. Decisions are represented by diamonds, wherein "Y" denotes a positive, "N" a negative test.

In a first step S1 a user request to record the content broadcast event is received.

In parallel step S8 a content broadcast database is maintained allocating to each content broadcast event reception licence information indicating whether or not the content broadcast event is allowed for over-the-top retransmission, event storage licence information indicating whether or not the content broadcast event is allowed for hosted storage and event upload licence information indicating whether or not the content broadcast event recorded in the personal local storage space is allowed for upload to the hosted storage system. Respective license information is read out in the corresponding decision steps.

In the following second step S2 it is determined whether or not the content broadcast event is allowed for over-the-top retransmission. For that purpose the allocated event reception licence information from the content broadcast database is read out in step S2'.

If the content broadcast event is allowed for over-the-top retransmission a reception of an over-the-top retransmission of the content broadcast event is initiated in a third step S3.

If - alternatively - the content broadcast event is not allowed for over-the-top retransmission a user client device is requested to receive the content broadcast event directly from a content broadcasting source in an alternative third step S3'.

In a fourth step S4 it is determined whether or not the content broadcast event is allowed for storage in a hosted storage system. To provide for that, in step S4' the allocated event storage licence information is read out from the content broadcast database'.

If the content broadcast event is allowed for hosted storage a recording of the content broadcast event in a user-specific recording space of the hosted storage system is initiated in a fifth step S5;

If - alternatively - the content broadcast event is not allowed for hosted storage a user client device is requested to record the content broadcast event in a personal local storage space in an alternative fifth step S5'.

In a sixth step S6 it is determined whether or not the content broadcast event recorded in the user client device is allowed for upload to the hosted storage system. For that purpose the method includes reading the allocated event upload licence information from the content broadcast database in step S6'.

If the content broadcast event is allowed for upload to the hosted storage system, the user client device is requested to upload the content broadcast event to the user specific recording space of the hosted storage system in a seventh step S7.

If - alternatively - the content broadcast event is not allowed for upload to the hosted storage system, the content broadcast event remains in the personal local storage space.

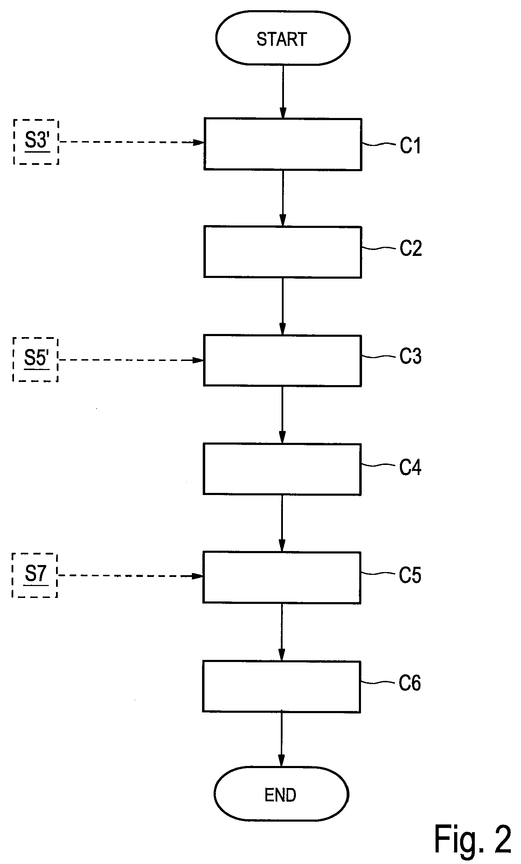

A flow chart of a client method according to the second aspect of the invention is schematically shown in fig. 2. For reasons of clarification server method requests involved in the client method are shown in fig. 2 using dashed lines/boxes.

In a first step C1 a management server request to receive the content broadcast event directly from a content broadcasting source is received.

In response to receiving the management server request, in second step C2, a reception of the content broadcast event directly from a content broadcasting source is initiated.

In the following third step C3 a management server request to record the content broadcast event in a personal local storage space is received.

In response to receiving the management server request, in a following fourth step C4, a recording of the content broadcast event in a personal local storage space is initiated.

In the following fifth step C5 a management server request to upload the content broadcast event to the user specific recording space of the hosted storage system is received.

In response to receiving the management server request, in a following sixth step C6, an upload the content broadcast event to the user specific recording space of the hosted storage system is initiated.

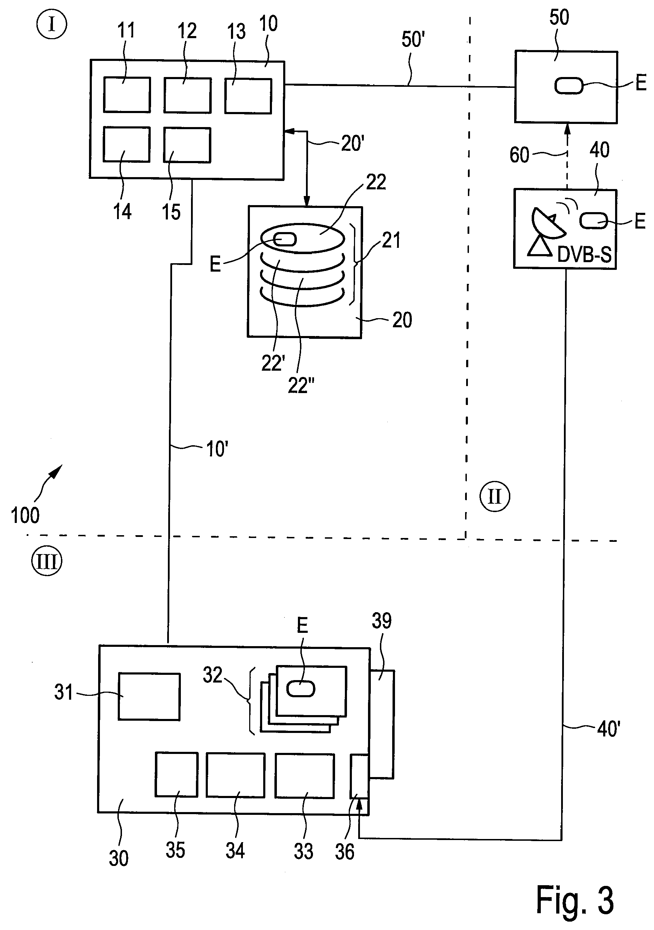

Server arrangement and client will now be explained with respect to fig. 3. For reasons of clarification fig. 3 is split into three spheres I, II and III: The solution provider sphere I being in discretion of a solution provider, e.g. a provider of cloud-based PVRs; the content broadcasting sphere II being in discretion of a original content provider, e.g. a TV station; and the user client sphere III being in physical discretion of the user.

In the server arrangement 100 in fig, 3 the user-accessible recording space of the hosted storage 21 system is a user-specific recording space 22, 22', 22". One private copy of the content broadcast event E is recorded for each user in a respective user specific recording-space 22, 22', 22".

A server arrangement 100 in the solution provider sphere I in fig. 3 comprises a management server 10 for managing personal content recording of a content broadcast event E and a play-out server 20 comprising a hosted storage system 21. The hosted storage system has several user-specific recording spaces 22, 22', 22" each one exclusively reserved for a distinct user. Exemplary a recorded content broadcast event E is shown in the "upmost" user-specific recording space 22.

Management server 10 and play-out server 20 can communicate via a data-link 20', which can be implemented as a LAN connection, if - for example - both servers 10, 20 reside in the same building. Alternatively, the data-link 20' can be implemented as a WAN connection, if - for example - both servers 10, 20 are hosted in different countries. A combination of LAN and WAN connections is possible in case multiple distributed playout servers are used.

An OTT retransmission source 50, in the present case a multi-cast server, and the content broadcasting source 40, in the present case a satellite feeding unit, are shown in the content broadcasting sphere II of fig. 3. So speaking the original content provider on one hand broadcasts the content broadcast event E from broadcasting source 40. On the other hand original content provider provides content broadcast event E for an OTT retransmission from OTT retransmission source 50. The content broadcast event E is routed from broadcasting source 40 to OTT retransmission source 50 via a content routing channel 60.

The management server 10 is adapted to engage with the OTT retransmission source 50 via a bidirectional OTT retransmission channel 50', e.g. via IPV4 protocol.

A user client device 30, which is, by example, designed as a monolithic HDMI dongle having a HDMI connector 39, is shown in the user client sphere III in fig. 3. The user client device 10 is adapted to engage with the management server 10 via a bidirectional internet connection 10', e.g. via http protocol. The user client device 10 is also adapted to engage with content broadcasting source 40 a unidirectional DVB-S connection as content broadcasting channel. For that purpose the user client device 10 is equipped with an on-board DVB-S receiver 36.

Turning to the server arrangement 100, the play-out server 20 is adapted to play out a content broadcast event E recorded in the user-specific recording space 22 of the hosted storage system 21.

The management server 10 comprises a user relation unit 11 adapted to receive a user request to record the content broadcast event E, a validation unit 12 adapted to determine whether or not the content broadcast event E is allowed for over-the-top retransmission; and adapted to determine whether or not the content broadcast event E is allowed for storage in a hosted storage system 21.

The management server 10 further comprises a reception management unit 13 adapted to initiate a reception of an over-the-top retransmission of the content broadcast event E; and adapted to request a user client device 30 to receive the content broadcast event directly from a content broadcasting source 40.

The management server 10 also comprises a recording management unit 14 adapted to initiate a recording of the content broadcast event E in a user-specific recording space 22 of the hosted storage system 21; and to request the user client device 30 to record the content broadcast event E in a personal local storage space 32.

The management server 10 also comprises a recommender engine 15 for recommending to a user a content broadcast event E to be recorded.

It is to be understood that the user relation unit 11, the validation unit 12, the reception management unit 13, the recording management unit 14 and the recommender engine 15 - which in the present case are comprised by the management server 10 - can be embodied by separate servers or distributed between several servers.

The user client device 30 comprises a communication unit 31 adapted to receive a management server request to receive the content broadcast event E directly from a content broadcasting source 40; and adapted to receive a management server request to record the content broadcast event in a personal local storage space 32. In the present example the personal local storage space 32 comprises 64 GB of recording space. The user client device 30 also comprises a client reception management unit 33 adapted to initiate a reception of the content broadcast event E directly from a content broadcasting source 40. In the present case on-board the client reception management unit 33 is adapted to initiate a reception via the on-board DVB-S receiver 36.

Also comprised by the user client device 30 is a client recording management unit 34 adapted to initiate a recording of the content broadcast event in the personal local storage space 32. The communication unit 31 is adapted to receive a management server request to upload the content broadcast event E to the user specific recording space 22 of the hosted storage system 21. The user client 30 further comprises a client uploading management unit 35 adapted to initiate an upload of the content broadcast E event to the user specific 22 recording space of the hosted storage system 21. It is to be understood that the components comprised by the user client device 30 can be provide as discrete logic and do not necessarily have to be separate components.

A further embodiment of a server arrangement (not shown) in communication with a client device has the OTT retransmission source 50 in the solution provider sphere I being in discretion of a solution provider, e.g., the provider of cloud-based PVRs. In other words, the OTT retransmission source 50 is hosted by the same provider as the management server 10. The content broadcasting source 40, in the present case a satellite feeding unit, remains in the content broadcasting sphere II being in discretion of the original content provider, e.g. the TV station.

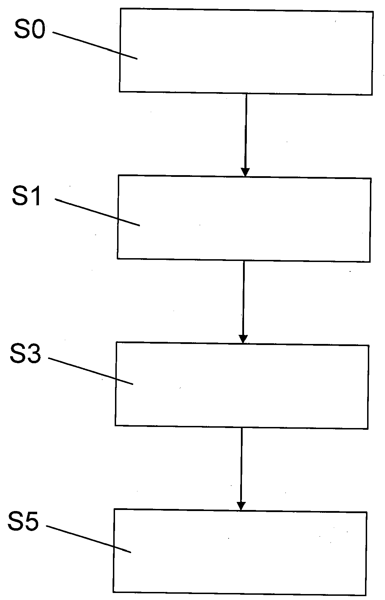

Fig. 4 shows schematically a server based method, for managing personal content recording of a content broadcast event as a user's private copy.

In an initial step S0 at least one content broadcast event is recommended to the user by means of a recommender application that is running on a hosted storage system.

In the next step S1, in response to the recommendation, a user request to record the content broadcast event is received.

In response to receiving the user request, in a next step S3 a reception of an over-the-top retransmission of the content broadcast event via a streaming application that is capable of connecting to an OTT retransmission source and is running on a hosted storage system is initiated.

In the next step S5 a recording of the content broadcast event in a user-accessible recording space of the hosted storage system as a user-private copy is initiated.

### REFERENCE LIST

- E: content broadcast event
- S1...Sn: server method steps
- C1...Cn: client method steps
- 10: management server
- 10': bidirectional internet connection
- 11: user relation unit
- 12: validation unit
- 13: reception management unit
- 14: recording management unit
- 15: recommender engine
- 20: play-out server
- 20': data link
- 21: hosted storage system
- 22, 22', 22": user-specific recording space
- 30: user client device
- 31: communication unit
- 32: personal local storage space
- 33: client reception management unit
- 34: client recording management unit
- 35: client uploading management unit
- 36: DVB-S receiver
- 39: HDMI connector
- 40: content broadcasting source
- 40': content broadcasting channel
- 50: OTT retransmission source
- 50': OTT retransmission channel
- 60: content routing channel
- 100: server arrangement

## Claims

1. Method, preferably server based, for managing personal content recording of a content broadcast event as a user's private copy, comprising:
- (S0) recommending to the user at least one content broadcast event by means of a recommender application that is running on a hosted storage system and/or remotely on a user client device;
- (S1) receiving, in response to the recommendation, a user request to record the content broadcast event, and, in response to receiving the user request:
- (S3) initiating a reception of an over-the-top retransmission of the content broadcast event via a streaming application that is capable of connecting to an OTT retransmission source and is running on a hosted storage system;
- (S5) initiating a recording of the content broadcast event in a user-accessible recording space of the hosted storage system as a user-private copy.

2. Method according to claim 1, wherein the following steps are performed between the step of (S1) receiving, in response to the recommendation, a user request to record the content broadcast event and the step of (S5) initiating a recording of the content broadcast event in a user-accessible recording space of the hosted storage system:
- (S2) determining whether or not the content broadcast event is allowed for over-the-top (OTT) retransmission;
- (S4) determining whether or not the content broadcast event is allowed for storage in a hosted storage system;
- (S3) initiating the reception of the over-the-top retransmission of the content broadcast event if the content broadcast event is allowed for over-the-top retransmission;
- (S3') if the content broadcast event is not allowed for over-the-top retransmission: requesting a user client device to receive the content broadcast event directly from a content broadcasting source;
wherein the step of (S5) initiating a recording of the content broadcast event in a user-accessible recording space of the hosted storage system is performed if the content broadcast event is allowed for hosted storage;
and wherein the method comprises the step:
- (S5') if the content broadcast event is not allowed for hosted storage: requesting the user client device to record the content broadcast event in a personal local storage space.

3. Method according to claim 2, further comprising:
- (S6) determining whether or not the content broadcast event recorded in the user client device is allowed for upload to the hosted storage system;
- (S7) if the content broadcast event is allowed for upload to the hosted storage system: requesting the user client device to upload the content broadcast event to the user specific recording space of the hosted storage system.

4. Method according to claim 2 or 3, comprising the step:
- (S8) maintaining a content broadcast database allocating to each content broadcast event reception licence information indicating whether or not the content broadcast event is allowed for over-the-top retransmission, and/or event storage licence information indicating whether or not the content broadcast event is allowed for hosted storage, and/or event upload licence information indicating whether or not the content broadcast event recorded in the personal local storage space is allowed for upload to the hosted storage system, and wherein
- determining whether or not the content broadcast event is allowed for over-the-top retransmission comprises (S2') reading the allocated event reception licence information from the content broadcast database, and wherein
- determining whether or not the content broadcast event is allowed for storage in a hosted storage system comprises (S4') reading the allocated event storage licence information from the content broadcast database.

5. Method according to claim 4, wherein maintaining the content broadcast database includes allocating to each content broadcast event upload licence information indicating whether or not the content broadcast event recorded in the personal local storage space is allowed for upload to the hosted storage system, and wherein
- determining (S6') whether or not the content broadcast event recorded the personal local storage space is allowed for upload to the hosted storage system comprises reading the allocated event upload licence information from the content broadcast database.

6. Method according to any of the preceding claims, wherein the content broadcast is provided by a source, preferably an OTT retransmission source, in an adaptive streaming format, preferably DASH, providing for at least a high quality representation and a lower quality representation of the content broadcast event, wherein the initiated recording of the content broadcast event in the user-accessible recording space of the hosted storage system is a recording of the high quality representation of the content broadcast event, wherein the high quality representation is preferably the representation with the highest available quality, wherein the high quality representation is the private copy representation of the content broadcast event that is recorded as a private copy exclusively for this user in the user-accessible recording space of the hosted storage system.

7. Method according to claim 6, further comprising:
- in addition to the high quality representation at least a further copy of the lower quality representation is initiated to be recorded in the user-accessible recording space of the hosted storage system;
- initiating a recording of one and the same content broadcast event in a group-accessible recording space of the hosted storage system as a redundant copy of the high quality representation and as at least a further redundant copy of the lower quality representation.

8. Method according to any of the preceding claims, wherein each content broadcast event of a broadcast channel predefined by the user is recorded end-to-end and is purged from the user-accessible recording space of the hosted storage system a predetermined time span after completion of a continuous transmission of the content broadcast event, wherein the predetermined time span is preferably the end-to-end length of the content broadcast event, and
- playing out to a user, upon a user request, the content broadcast event with a minimum time-delay parallel to recording the content broadcast event in the user-accessible recording space of the hosted storage system.

9. Method according to any of the preceding claims, comprising:
- inserting advertising, preferably TV advertising, that is personalized to the user into an on-demand stream of a broad cast event or broadcast events upon playing the stream to user, preferably based on manifest data.

10. Client method for managing personal content recording of a content broadcast event as a user's private copy, comprising the steps of:
- (C1) receiving a management server request to receive the content broadcast event directly from a content broadcasting source, and, in response to receiving the management server request:
- (C2) initiating a reception of the content broadcast event directly from a content broadcasting source;
- (C3) receiving a management server request to record the content broadcast event in a personal local storage space, and, in response to receiving the management server request:
- (C4) initiating a recording of the content broadcast event in a personal local storage space.

11. Method according to claim 10, further comprising:
- (C5) receiving a management server request to upload the content broadcast event to the user specific recording space of the hosted storage system, and, in response to receiving the management server request:
- (C6) initiating an upload the content broadcast event to a user specific recording space of a hosted storage system.

12. Method according claim 10 or 11, wherein the step of initiating a reception of the content broadcast event directly from a content broadcasting source involves receiving the content broadcast event from digital video broadcasting source via a DVB-over-IP distribution, preferably a SAT-over-IP distribution in a user's home network.

13. Server arrangement (100) comprising at least a management server (10) for managing personal content recording of a content broadcast event (E) as a user's private copy, the management server comprising:
- a user relation unit adapted to receive a user request to record the content broadcast event
- a validation unit adapted to determine whether or not the content broadcast event is allowed for over-the-top retransmission; and adapted to determine whether or not the content broadcast event is allowed for storage in a hosted storage system
- a reception management unit adapted to initiate a reception of an over-the-top retransmission of the content broadcast event; and adapted to request a user client device to receive the content broadcast event directly from a content broadcasting source
- a recording management unit adapted to initiate a recording of the content broadcast event in a user- accessible recording space of the hosted storage system; and to request the user client device to record the content broadcast event in a personal local storage space.

14. User client device (30), comprising:
- a communication unit adapted to receive a management server request to receive the content broadcast event directly from a content broadcasting source; and adapted to receive a management server request to record the content broadcast event in a personal local storage space
- a client reception management unit adapted to initiate a reception of the content broadcast event directly from a content broadcasting source
- a client recording management unit adapted to initiate a recording of the content broadcast event in a personal local storage space

15. Client according to claim 14, wherein the communication unit is adapted to receive a management server request to upload the content broadcast event to the user specific recording space of the hosted storage system and the user client further comprises a client uploading management unit adapted to initiate an upload of the content broadcast event to the user specific recording space of the hosted storage system.
